# EUROPEAN PATENT APPLICATION

(11) **EP 1 550 699 A1**
(43) Date of publication of application: **06.07.2005**
(21) Application number: 03751428.8
(22) Date of filing: 09.10.2003
(51) Int. Cl.: C08L 101/00, C08K 3/40, C08K 5/00, C08K 7/00, B32B 27/18, B32B 9/00

(54) **THERMOPLASTIC RESIN COMPOSITION AND MOLDING THEREOF**

(30) Priority: 09.10.2002 JP 2002295710
(71) Applicant: Mitsubishi Chemical Corporation, Tokyo 108-0014 (JP)
(72) Inventor: KAWA, Manabu, Mitsubishi Chemical Group, Inc., Yokohama-shi, Kanagawa 227-8502 (JP)
(74) Representative: TER MEER STEINMEISTER & PARTNER GbR
(86) International application number: PCT/JP2003/012984
(87) International publication number: WO 2004/033558

(57) **Abstract**

A thermoplastic resin composition and a molded product, having excellent transparency, ultraviolet absorptivity and light resistance, are provided.

A thermoplastic resin composition comprising from 0.001 to 10 wt%, based on the total resin composition, of a glass filler whose glass formulation consists mainly of a silicon oxide composition and exhibiting light transmittances at wavelengths of 340 nm and 400 nm of from 0 to 0.5% and from 30 to 99%, respectively, per mm of light path length. A molded product which is a molded product of a thermoplastic resin composition, **characterized in that** in a case where (1) an ultra-high pressure mercury lamp which does not substantially emit ultraviolet light having a wavelength of at most 250 nm, is used at such a distance that the intensity of ultraviolet light having a wavelength of 350 nm generated by the lamp would be 0.1 W/cm² on the surface of the molded product, and (2) the molded product is irradiated for 72 hours in the air at the surface temperature thereof being 60°C, the light transmittance at a wavelength of 650 nm after the irradiation, is at least 70% per mm of light path length.

## Description

### TECHNICAL FIELD

The present invention relates to a thermoplastic resin composition having a glass filler dispersed therein, which is excellent in transparency and which has excellent light resistance derived from ultraviolet absorptivity, and a molded product made thereof. The thermoplastic resin composition of the present invention and the molded product made thereof, have excellent ultraviolet resistance which has not been observed heretofore and are thus useful for applications to optical components such as various projectors or displays.

### BACKGROUND ART

Heretofore, it has been common to add an organic ultraviolet absorber in order to improve the light resistance (particularly ultraviolet resistance) of a transparent thermoplastic resin such as an aromatic polycarbonate resin or an acrylic resin. However, the functional mechanism of such an organic ultraviolet absorber is one to prevent photo-deterioration of a resin matrix by a photo-reaction of the organic ultraviolet absorber itself, and thus has had a drawback that photo-deterioration of the resin rapidly proceeds from the time when the organic ultraviolet absorber has been consumed, and such a point of time is the limit of the light resistance of the material. Further, such an organic ultraviolet absorber is usually of a low molecular weight, whereby there has been a problem of bleedout i.e. a phenomenon in which it transfers to the surface of the molded product as time passes.

On the other hand, as an ultraviolet absorber made of an inorganic substance, fine particles of a semiconductor such as titanium oxide, zinc oxide or cerium oxide, have heretofore been used, for example, in an application to impart a sun screening property to cosmetics. Such fine semiconductor particles have a photocatalytic effect to decompose an organic substance in contact at the surface of the fine semiconductor particles by an oxidation-reduction effect of an electron-hole pair formed by absorption of ultraviolet light. Thus, such particles have a drawback that if they are dispersed in a transparent thermoplastic resin, they decompose the resin by such a photocatalytic effect. As a method for producing titanium dioxide having such a photocatalytic effect reduced, a method for producing a rutile type ultrafine particulate titanium dioxide of low activity coated with a silane coupling agent, specifically an alkoxy silane compound and/or an amino alkoxy silane compound, is disclosed (e.g. JP-A-2001-26423). However, with conventional fine semiconductor particles, even if their primary particle sizes are small at a level of from 1 to 50 nm, secondary agglomeration can not be avoided, and they usually become agglomerates having an average particle size of at least 50 nm, and if the above-mentioned coating treatment with a silane coupling agent is applied thereto, they tend to have a still larger particle size, and thus they had a problem that when dispersed in a resin, they scatter visible light to make the resin opaque.

With respect to the transparency of a composite material, it is possible to improve the transparency by adjusting refractive indices of two materials to be equal, even without necessity to disperse and mix in a transparent material another material in a particle size smaller than the wavelength of visible light. For example, it is in principle possible to increase the refractive index by adding a heavy element material such as a titanium alkoxide, for example, at the time of synthesizing silica glass by a sol-gel method (a method for synthesizing glass by hydrolysis and condensation reaction of a metal alkoxide or the like), and a synthesis of such glass flakes, has been disclosed (e.g. JP-A-9-110453).

It is also known that certain glass flakes are useful as a reinforcing material for a thermoplastic resin. For example, a case is known wherein alkali resistant glass flakes are incorporated to polypropylene (JP-A-9-110453) for a resin molded product containing glass flakes which have a certain specific particle size and a certain specific average thickness and which are treated with a certain specific amount of a surface treating agent, wherein the proportion of glass flakes having a specific thickness is a certain specific proportion (JP-A-6-9791).

However, the technology disclosed in these publications, is one wherein a crystallizable thermoplastic resin poor in transparency, such as a polypropylene resin or a polybutylene terephthalate resin, is used, and besides, the effect of dispersing the glass flakes is limited to improvement of the mechanical strength, whereby it was not possible to obtain a thermoplastic resin composition excellent in transparency and ultraviolet resistance.

Further, a technology is disclosed wherein at the time of utilizing glass flakes for corrosion resistant lining, they are made into a resin composition. However, the resin to be used here is limited to a curable resin such as a vinylester resin, an unsaturated polyester resin, an epoxy resin, a tar epoxy resin or a phenol resin, whereby it was not possible to produce a thermoplastic resin composition excellent in transparency and ultraviolet resistance (e.g. JP-A-8-48535).

On the other hand, as a method for producing a flaky glass, a method is known wherein glass flakes are produced by a special method by using a solution containing an organic metal compound and a compound capable of forming an oxide which absorbs visible light. It is disclosed that in order to impart an ultraviolet absorptive property, a raw material of an oxide of e.g. iron, cerium, titanium, vanadium, chromium, uranium, lead or zinc, is added to flaky glass, and it is disclosed that when the ultraviolet absorptive flaky glass is used as a filler for a plastic, it is possible to prevent deterioration of the plastic against ultraviolet light (JP-A-3-174937 (Japanese Patent 2932622)). However, by a study made by the present inventor, it has been found that by such a method, an oxide of e.g. iron, cerium, titanium, vanadium, chromium, uranium, lead or zinc having a high photocatalytic activity, will be exposed on the surface of the ultraviolet absorptive flaky glass, and the light resistance of the resin rather tends to be deteriorated under an intensive ultraviolet irradiation condition or under a high temperature condition exceeding a level of 50°C.

Further, on page 548 of "Prediction of Useful Life of Polymer and Technology to Prolong the Useful Life" (publisher: NTS INC., October 26, 2002, ISBN4-86043-007-7 C3043), it is disclosed effective for improvement of light resistance of a resin to use a hindered amine type radical capturing agent (so called HALS) in combination with an ultraviolet absorber. However, HALS is a basic compound, and it is difficult to apply this HALS-combined use technology to a condensed resin, of which hydrolysis by a basic compound is problematic, and it is disclosed that HALS cannot be applied particularly to an aromatic polycarbonate resin.

### DISCLOSURE OF THE INVENTION

With respect to a thermoplastic resin composition to be used for an optical component for e.g. a projector or a display, still higher ultraviolet resistance and transparency are desired, but a satisfactory one has not yet been obtained.

The present invention has been made under these circumstances, and it is an object of the present invention to provide a thermoplastic resin composition having excellent transparency and yet having ultraviolet absorptivity and light resistance, and a molded product made of such a thermoplastic resin composition.

The present inventor has conducted an extensive study to accomplish the above object and as a result, has found that when a thermoplastic resin composition is prepared by dispersing to a transparent thermoplastic resin such as an aromatic polycarbonate resin or an amorphous polyolefin resin, silica glass flakes having the refractive index adjusted to the resin by mixing e.g. titanium oxide, not only the composition will be provided with a high light transmittance in a visible light wavelength region and an ultraviolet absorption ability, but also yellowing, melting, burnt deposit, surface cracking or bleeding out of an additive on the surface when its molded product is irradiated with ultraviolet light, can distinctly be suppressed, as compared with the prior art wherein an organic ultraviolet absorber or a hindered amine photostabilizer so-called HALS (which is considered to have a radical capturing function) or the like, is merely mixed to the transparent thermoplastic resin, and thus, he has arrived at the present invention.

Namely, in a first aspect, the present invention provides a thermoplastic resin composition comprising a thermoplastic resin and a glass filler whose glass formulation consists mainly of a silicon oxide composition and exhibiting light transmittances at wavelengths of 340 nm and 400 nm of from 0 to 0.5% and from 30 to 99%, respectively, per mm of light path length.

Such a thermoplastic resin composition has a high light transmittance and ultraviolet absorptivity and has effects such that coloring, melting or burnt deposit by irradiation with ultraviolet light, surface cracking, or bleeding out of low molecular weight organic compounds from the resin composition, is little.

In another aspect, the present invention provides a thermoplastic resin composition comprising (1) a transparent thermoplastic resin, and (2) a glass filler containing at least one element selected from titanium, zinc, cerium and antimony, of which the outermost surface of a residual powder after incineration at 600°C in the air, consists essentially of a silicon oxide composition.

Such a thermoplastic resin composition has the ultraviolet resistance remarkably improved even under a severe condition such as a high temperature condition exceeding about 50°C and under irradiation with ultraviolet light for a long time and has effects such that coloring, melting or burnt deposit by irradiation with ultraviolet light, or bleeding out of low molecular weight organic compounds from the resin composition, is little.

Further, in another aspect, the present invention provides a molded product which is a molded product of a thermoplastic resin composition, characterized in that in a case where (1) an ultra-high pressure mercury lamp which does not substantially emit ultraviolet light having a wavelength of at most 250 nm, is used at such a distance that the intensity of ultraviolet light having a wavelength of 350 nm generated by the lamp would be 0.1 W/cm² on the surface of the molded product, and (2) the molded product is irradiated for 72 hours in the air at the surface temperature thereof being 60°C, the light transmittance at a wavelength of 650 nm after the irradiation, is at least 70% per mm of light path length.

Such a molded product has the ultraviolet resistance remarkably improved even under a severe condition such as irradiation with ultraviolet light for a long time and at a high temperature, and has effects such that surface cracking by irradiation with ultraviolet light, or bleeding out of low molecular weight organic compounds from the resin composition, is little.

Further, in another aspect, the present invention provides a molded product which is a molded product of a thermoplastic resin composition, characterized in that in a case where (1) an ultra-high pressure mercury lamp which does not substantially emit ultraviolet light having a wavelength of at most 250 nm, is used at such a distance that the intensity of ultraviolet light having a wavelength of 350 nm generated by the lamp would be 0.3 W/cm² on the surface of the molded product, and (2) the molded product is irradiated for 4 hours in the air at the surface temperature thereof being 95°C, the retention of the light transmittance at a wavelength of 420 nm after the irradiation, is at least 60%.

Such a molded product has the ultraviolet resistance remarkably improved even under a severe condition such as irradiation with ultraviolet light for a long time and at a high temperature, and has effects such that the transparency is excellent even by irradiation with ultraviolet light.

Further, in another aspect, the present invention provides an inorganic coating layer-laminated molded product comprising a molded product made of a thermoplastic resin composition and an inorganic coating layer formed thereon, and in a case where (1) it is used under a condition that the intensity of ultraviolet light having a wavelength of 350 nm contained in the light emitted from a white light source would be 2 mW/cm² on the surface of the molded product, and (2) the molded product is irradiated for 1,400 hours in the air at the surface temperature thereof being 110°C, the retention of the light transmittance at a wavelength of 420 nm after the irradiation, is at least 70%.

Such a molded product has the ultraviolet resistance remarkably improved even under a practical severe condition such as irradiation with ultraviolet light for a very long time and at a high temperature, equal to the useful life of a common white light source such as an ultra-high pressure mercury lamp used for e.g. a liquid crystal projector, and has effects such that coloration such as yellowing or browning by irradiation with ultraviolet light, or a deterioration phenomenon such as melting or burnt deposit which is considered to be induced by such coloration, is remarkably suppressed.

Further, in another aspect, the present invention provides a molded product obtained by using a thermoplastic resin composition comprising (1) a thermoplastic resin, and (2) a glass filler containing at least one element selected from titanium, zinc, cerium and antimony, of which the outermost surface of a residual powder after incineration at 600°C in the air, consists essentially of a silicon oxide composition, which has a total light transmittance of from 40 to 100% and a haze of from 50 to 100%.

Such a molded product has the ultraviolet resistance remarkably improved even under a severe condition such as irradiation with ultraviolet light for a long time or at a high temperature, and has effects such that coloration such as yellowing or browning by irradiation with ultraviolet light, or a deterioration phenomenon such as melting or burnt deposit which is considered to be induced by such coloration, is remarkably suppressed, and bleeding out of low molecular weight organic compounds from the resin composition, is little. Further, it has effects such that the total light transmittance is high, and the proportion of scattered light in the total transmittance is high, and thus, it is useful for e.g. a light scattering plate.

### BRIEF DESCRIPTION OF THE DRAWINGS

Fig. 1 is a graph showing the results of a long-term irradiation test of the molded product of Example 10.
Fig. 2 is a graph showing the results of a long-term irradiation test of the molded product of Example 11.

### BEST MODE FOR CARRYING OUT THE INVENTION

### THERMOPLASTIC RESIN

The thermoplastic resin to be used in the present invention is not particularly limited so long as the thermoplastic resin composition of the present invention, obtained by using it, satisfies the physical properties defined by the present invention. However, from the viewpoint of transparency of the thermoplastic resin composition, one excellent in transparency in a visible light wavelength region (within a wavelength range of from about 400 to 650 nm) and colorlessness, is preferred. Preferred thermoplastic resins may, for example, be an aromatic polycarbonate resin (total light transmittance: 90%) employing as a monomer component a polyhydric phenol represented by bisphenol A, an acrylic resin represented by a poly(meth)acrylate such as a polymethyl methacrylate (PMMA resin), a copolymer of methyl methacrylate and benzyl methacrylate (such as a resin known by a registered trademark "OPTOREZ" supplied by Hitachi Chemical Company, Ltd.) or a polycyclohexyl methacrylate (total light transmittance of PMMA resin: 93%), an amorphous polyolefin resin (total light transmittance: 92%) such as a polycycloolefin resin employing as a monomer component a norbornene derivative (such as a resin known by a registered trade mark "ZEONEX" supplied by Nippon Zeon Co., Ltd. or "ARTON" supplied by JSR Corporation), a polyethylene terephthalate resin (PET resin), and a semicrystalline aromatic polyamide resin. Among them, preferred from the viewpoint of the transparency is a thermoplastic resin having a total light transmittance (light path thickness: 3.2 mm) of at a least 85% in accordance with ASTM-D1003.

Among the above-mentioned thermoplastic resins, preferred from the viewpoint of the heat resistance is one having a glass transition point of at least 120°C, more preferably at least 140°C, and an aromatic polycarbonate resin or a polycycloolefin resin may, for example, be mentioned.

Among the above thermoplastic resins, preferred in that the dimensional change due to absorption of water is small, is one having a small oxygen atom content in its chemical structure, such as a polycycloolefin resin or an aromatic polycarbonate resin.

In a case where the light scattering ability of the resin composition of the present invention is utilized like the after-mentioned molded product 2, a PET resin may also be preferably used, for example, for a light scattering plate.

### GLASS FILLER

The glass filler to be used in the present invention is one whose glass formulation consists mainly of a silicon oxide composition. Here, the silicon oxide composition is one represented by a silica composition (SiO₂). However, also a case wherein a silicon atom-carbon atom bond is present partially in the silica composition to form a SiOₓ composition (wherein x is a positive number exceeding 0 and less than 2), for example, by a method of copolymerizing an organic silane in the synthesis of silica by a sol-gel method, is included in the silicon oxide composition in the present invention.

The glass filler to be used in the present invention is one whose glass formulation consists mainly of the above silicon oxide composition, but for the purpose of imparting ultraviolet absorptivity to the glass filler, an inorganic ultraviolet absorber is incorporated. Here, the ultraviolet absorptivity means an ability to absorb light having a wavelength in an ultraviolet region of at most 400 nm. Such an inorganic ultraviolet absorber is further effective for the purpose of adjusting the refractive index of the glass filler to the above thermoplastic resin, and further, it may have an effect of e.g. imparting alkali resistance or controlling the mechanical strength.

The inorganic ultraviolet absorber may, for example, be a transition metal oxide (such as yttrium oxide, lanthanum oxide, cerium oxide, praseodymium oxide, samarium oxide, europium oxide, gadolinium oxide, terbium oxide, dysprosium oxide, holmium oxide, erbium oxide, thulium oxide, titanium oxide, zirconium oxide, chromium oxide, manganese oxide, iron oxide, cobalt oxide, nickel oxide, copper oxide, zinc oxide, cadmium oxide, gallium oxide, indium oxide, germanium oxide, tin oxide, lead oxide or antimony oxide) composition. Preferred from the viewpoint of colorlessness in a visible light wavelength region and the ultraviolet absorptivity, is titanium oxide, zinc oxide, cerium oxide or antimony oxide. They are selected for use depending upon the necessary wavelength of the ultraviolet absorption edge. Accordingly, the glass filler in the present invention preferably contains at least one element selected from titanium, zinc, cerium and antimony derived from the above inorganic ultraviolet absorber. A plurality of such inorganic ultraviolet absorbers (such as transition metal oxides) may be used in combination.

Further, it is also possible that the particle size of such an inorganic ultraviolet absorber is reduced to create a quantum-confining effect, whereby the absorption edge wavelength may be shortened, so that, for example, the absorption edge which is in a visible light region in a bulk state, may be shifted to the ultraviolet region to diminish a visible color and to make it colorless, thereby to control the ultraviolet absorptivity.

Further, for the purpose of adjusting the refractive index of the glass filler to the above thermoplastic resin, the glass filler of the present invention may contain an alkali metal oxide (such as lithium oxide, sodium oxide, potassium oxide, rubidium oxide or cesium oxide) composition, an alkaline earth metal oxide (such as magnesium oxide, calcium oxide, strontium oxide or barium oxide) composition, boron oxide, aluminum oxide, or a known optional composition as an inorganic glass composition (such as a chalcogenide glass composition or a fluoride glass composition).

In the glass filler to be used in the present invention, the proportion of the silicon oxide composition is usually from 30 to 99.99 mol% as the proportion of silicon to the total of positive elements (i.e. the above-mentioned transition metal elements, the alkaline metal elements, the alkaline-earth elements, boron, aluminum, etc. in addition to silicon). If the upper limit value of this proportion of silicon is too large, the ultraviolet absorptivity of the glass filler may sometimes tend to be extremely small. Accordingly, the upper limit value is preferably 99.9 mol%, more preferably 99.5 mol%, most preferably 99 mol%. If the lower limit value of the proportion of silicon is too small, there may be a case where the photocatalytic activity of the glass filler becomes large, and the light resistance of the thermoplastic resin composition tends to be extremely poor. Accordingly, the lower limit value is preferably 40 mol%, more preferably 50 mol%, most preferably 60 mol%.

Further, the proportion of the inorganic ultraviolet absorber in the glass filler is usually from 1 to 50 mol% as the proportion of positive elements derived from the inorganic ultraviolet absorber, based on the total of the positive elements. If the upper limit value of the proportion of the positive elements derived from the inorganic ultraviolet absorber is too large, the glass filler may have a high refractive index substantially departing from the refractive index range feasible by an organic synthetic resin. Accordingly, the upper limit value is preferably 40 mol%, more preferably 30 mol%, most preferably 20 mol%. If the lower limit value of the proportion of the positive elements derived from the inorganic ultraviolet absorber is too small, the ultraviolet absorptivity may become very low. Accordingly, the lower limit value is preferably 2 mol%, more preferably 4 mol%, most preferably 6 mol%.

The shape of the glass filler is not particularly limited and may, for example, be a known shape such as fiber-like, thin pieces (flakes), spherical, oval, rod-like, needle-like or hollow. However, for the purpose of selectively providing ultraviolet absorptivity, suppression of bleeding out of an organic low molecular weight additive used in combination, an effect (gas barrier effect) to prevent diffusion of gas molecules such as oxygen molecules or water molecules which cause deterioration of the resin, or adhesion of the inorganic coating layer which will be described hereinafter, it is preferably in the form of flakes. Namely, when it is dispersed in the same volume fraction, there will be effects by the flake surfaces i.e. effects for ultraviolet absorption (shielding) or for preventing diffusion of low molecular weight substances such as an organic low molecular weight additive or gas molecules, and effects to improve the adhesion of inorganic substance to the surface of the molded product, as flakes are exposed in some ratio on the surface of the molded product.

With respect to the size of the glass filler, the maximum length is usually from 0.01 to 100 µm. From the viewpoint of the transparency in a case where it is dispersed in a thermoplastic resin, the upper limit of this maximum length is preferably 50 µm, more preferably 10 µm, most preferably 1 µm.

In a case where the above glass filler is in the form of flakes as a preferred shape, the aspect ratio is preferably from 5 to 1,000. The aspect ratio here is a value obtained by dividing the maximum length of a flake (the maximum diameter in the plane direction of the flake) by the minimum length (thickness of the flake). The lower limit of the aspect ratio is preferably 7, more preferably 10, most preferably 20 from the viewpoint of the ultraviolet absorptivity and the transparency of the thermoplastic resin composition.

The glass filler may have a multi-phase structure. For example, there may be mentioned a core/shell structure wherein the surface layer of the glass filler particles has a chemical composition different from other portion, or a sea/island structure wherein the chemical composition other than the above silicon oxide composition (hereinafter referred to as an additive composition) is dispersed, as phase-separated, in the above silicon oxide composition. In a case where as the above additive composition, a semiconductor composition of e.g. titanium oxide, zinc oxide or cerium oxide which is preferred from the viewpoint of the colorlessness in a visible light wavelength region and the ultraviolet absorptivity, is permitted to take the above sea/island structure, it is particularly preferred to take the above core/shell structure wherein a silicon oxide composition represented by silica is provided as a surface layer (a coating layer) for the purpose of effectively sealing the photocatalytic action of the semiconductor, i.e. to let the surface of the glass filler be made substantially of the silicon oxide composition. Specifically, it is preferred that the surface in a depth of at least 10 nm from the outermost surface of the glass filler is made of the silicon oxide composition and contains no positive elements derived from the inorganic ultraviolet absorber, and it is particularly preferred that the surface in a depth of 20 nm is made of the silicon oxide composition and contains no such positive elements. When the surface of the glass filler is made substantially of the silicon oxide composition, the thermoplastic resin composition of the present invention containing such a glass filler, and a molded product obtainable by using the composition, will have the ultraviolet resistance improved remarkably, and as a result, it will be possible to suppress deterioration of the thermoplastic resin composition or its molded product, such as coloration by irradiation for a long period of time (which usually starts with yellowing and progresses in browning), melting (which usually takes place after coloration and is considered to be attributable to a decrease in the glass transition point and the melt viscosity due to decomposition of a high molecular weight substance to a low molecular weight substance, as the main mechanism) or cracking. The thickness of the coating layer made substantially of the silicon oxide composition, to be formed on the surface of the glass filler, is usually from 5 to 50 nm. If the upper limit value is too large, the coating layer may have a thickness sufficient to form an optical interface which causes optical phenomena (such as refraction, reflection and diffraction) at the surface of the glass filler, whereby the transparency of the thermoplastic resin composition of the present invention may substantially be lowered. Accordingly, the upper limit value is preferably 40 nm, more preferably 30 nm, most preferably 20 nm. On the other hand, if the lower limit value of the coating layer is too small, the effect to effectively seal the photocatalytic action of the glass filler may sometimes be extremely lowered. Accordingly, the lower limit value is preferably 8 nm, more preferably 10 nm. Such a thickness of the coating layer may be ascertained by observation by a transmission electron microscope.

The refractive index of the glass filler is not particularly limited, and it may be adjusted depending upon the refractive index of the thermoplastic resin to be used. It is usually from 1.4 to 2.0, as a value at 23°C, and from the viewpoint of transparent dispersibility in a common resin, it is preferably at least 1.45, more preferably at least 1.49 and preferably at most 1.70, more preferably at most 1.65, particularly preferably at most 1.60. The difference between the refractive index of the glass filler and the refractive index of the thermoplastic resin to be used, is preferably as small as possible from the viewpoint of the transparency of the thermoplastic resin composition containing such a glass filler, and is preferably adjusted to three places of decimals. This difference in the refractive indices is usually at most 0.05, preferably at most 0.02, more preferably at most 0.01, most preferably at most 0.005, at 23°C. For example, the refractive index of a bisphenol A polycarbonate resin (PC resin) as a common aromatic polycarbonate resin is known to have a measured value of 1.587, and the range of the refractive index of the glass filler most suitable for this numerical value will be from 1.582 to 1.592.

### METHOD FOR PRODUCING THE GLASS FILLER

The glass filler having a silicon oxide composition may be produced by a sol-gel method (using an alkoxysilane, water glass, etc. as the starting materials) in accordance with a known method or a similar method. Namely, the glass filler may be produced by preliminarily mixing fine particles of an inorganic ultraviolet absorber (preferably nano particles having a particle diameter of from 5 to 50 nm) or a metal oxide as a raw material for the inorganic ultraviolet absorber, to the starting material solution for the sol-gel method, followed by the sol-gel method. It is thereby possible to obtain a glass filler having the fine particles of the inorganic ultraviolet absorber dispersed as they are, or a glass filler in which the metal oxide as a raw material for the inorganic ultraviolet absorber undergoes a hydrolytic condensation reaction along with the sol-gel method and is dispersed to form domains of the inorganic ultraviolet absorber.

The glass filler containing the inorganic ultraviolet absorber, thus obtained, may be converted to a glass filler having its surface substantially coated with the silicon oxide composition, as the case requires. This can be done by the following method. Namely, in coexistence with commercially available colloidal silica (the average particle size is usually from 10 to 50 nm, preferably from 10 to 30 nm, further preferably from 10 to 20 nm), the glass filler may be dispersed in water or a lower alcohol (an alcohol having at most 4 carbon atoms, such as methanol, ethanol, isopropyl alcohol or n-butanol, which may contain water), and the pH is adjusted to be on an alkaline side. This operation is carried out by adding aqueous ammonia, an aqueous alkali metal hydroxide solution, an aqueous alkali metal carbonate solution or the like. By this alkalizing operation, the colloidal silica undergoes a change in the state of the electronic charge on the surface, and the dispersion tends to be unstable and is likely to be agglomerated and thus is likely to deposit on the surface of the glass filler to form a coating layer. The thickness of this coating layer is usually from 10 to 50 nm and can be controlled by the particle diameter of the colloidal silica to be used, the pH controlling condition, the temperature, the concentration, etc.

The glass filter to be used in the present invention may have the surface subjected to organic treatment for the purpose of improving the wettability or the dispersibility in the thermoplastic resin. Here, the organic treatment is to fix a suitable organic molecule to the surface of the glass filler by chemical bonding or adsorption. A specific example of such organic treatment may be treatment with a known silane coupling agent (an alkyl silane such as 3-aminopropyltrimethoxysilane, 3-aminopropyltriethoxysilane, 3-glycidyloxypropyltrimethoxysilane, 3-glycidyloxypropyltriethoxysilane, 3-mercaptopropyltrimethoxysilane, 3-acryloyloxypropyltrimethoxysilane, 3-carboxypropyltrimethoxysilane, methyltriethoxysilane, phenyltriethoxysilane, octyltriethoxysilane, dimethyldimethoxysilane or trimethylmethoxysilane) or a titanate type coupling agent. Among them, preferred is treatment with a silane coupling agent having a functional group, such as 3-aminopropyltriemethoxysilane, 3-aminopropyltriethoxysilane, 3-glycidyloxypropyltrimethoxysilane or 3-glycidyloxypropyltriethoxysilane. THERMOPLASTIC RESIN COMPOSITION

The thermoplastic resin composition of the present invention comprises the above thermoplastic resin and the above glass filler and is characterized in that the light transmittances at wavelengths of 340 nm and 400 nm are from 0 to 0.5% and from 30 to 99%, respectively, per mm of light path length.

The light transmittance at the wavelength of 340 nm is a numerical value defining the ultraviolet absorptivity of the thermoplastic resin composition of the present invention. The smaller the value, the better the ultraviolet absorptivity. Accordingly, it is preferably from 0 to 0.3%, more preferably from 0 to 0.2%. If this value is too large, the light resistance, particularly the ultraviolet resistance, tends to be inadequate, and specifically, yellowing by irradiation, cracking on the surface of the molded product, or bleeding out of an organic additive, an oligomer component or a low molecular weight organic substance as a decomposition product thereof, is likely to be remarkable.

The light transmittance at the above wavelength of 400 nm is a numerical value defining the transparency and/or colorlessness of the thermoplastic resin composition of the present invention. The larger the value, the better the transparency. Accordingly, its lower limit value is preferably 40%, more preferably 50%. If this value is too small, the transparency or colorlessness is likely to be inadequate for use of the molded product as an optical component.

The thermoplastic resin composition having such physical properties tends to be obtained by a combination of the thermoplastic resin with the above described glass filler, wherein their blend proportions are controlled as described hereinafter, or the difference in refractive indices of the thermoplastic resin and the glass filler is made small, preferably the after-mentioned organic ultraviolet absorber or hindered amine type photostabilizer, is further combined.

The content of the above glass filler is usually from 0.001 to 10 wt%. However, if the amount is too small, the ultraviolet absorptivity or the light resistance tends to be inadequate. Accordingly, the lower limit value is preferably 0.01 wt%, more preferably 0.05 wt%, most preferably 0.1 wt%. If the amount of the glass filler is too much, the transparency, light resistance or mechanical strength is likely to be inadequate, or the specific gravity may increase. Accordingly, the upper limit value is preferably 7 wt%, more preferably 5 wt%, most preferably 3 wt%.

The thermoplastic resin composition of the present invention has a phase structure wherein the above thermoplastic resin constitutes a matrix (continuous phase), and the above glass filler is dispersed therein.

The thermoplastic resin composition of the present invention may contain an organic ultraviolet absorber having an absorption band at a wavelength of at most 400 nm. Such an organic ultraviolet absorber may, for example, be a benzotriazole type ultraviolet absorber, a liquid ultraviolet absorber, a triazine type ultraviolet absorber or a benzophenone type ultraviolet absorber.

The thermoplastic resin composition of the present invention may contain a hindered amine type photostabilizer (which is so-called HALS and is considered to have a radical capturing function, and which may hereinafter be referred to as HALS). Such a hindered amine type photostabilizer may, for example, be decandioic acid bis(2,2,6,6-tetramethyl-1-(octyloxy)-4-piperidinyl) ester (such as TINUVIN 123S, manufactured by Ciba Specialty Chemicals,), bis(1,2,2,6,6-pentamethyl-4-piperidinyl)[[3,5-bis(1,1-dimethylethyl)-4-hydroxyphenyl]methyl]butyl malonate (TINUVIN 144, manufactured by Ciba Specialty Chemicals,), or decandioic acid bis(1,2,2,6,6-pentamethyl-4-piperidinyl) ester (TINUVIN 765, manufactured by Ciba Specialty Chemicals,). Among them, particularly preferred is bis(1,2,2,6,6-pentamethyl-4-piperidinyl)[[3,5-bis(1,1-dimethylethyl)-4-hydroxyphenyl]methyl]butyl malonate (TINUVIN 144).

The effect of incorporating the organic ultraviolet absorber or the hindered amine photostabilizer resides in providing excellent light resistance by a synergetic effect with the above glass filler. The contents of the organic ultraviolet absorber and the hindered amine type photostabilizer are not particularly limited, but they are, respectively, usually from 10 to 10,000 ppm of the thermoplastic resin composition. If the contents are too much, deterioration of the thermal stability of the thermoplastic resin composition, increase of bleeding out, decrease of the cracking resistance of the after-mentioned inorganic coating (i.e. decrease of the adhesion stability of the inorganic coating), etc., may tend to be remarkable. Accordingly, the upper limit value is preferably 5,000 ppm, more preferably 1,000 ppm. On the other hand, if the contents are too small, the effect for improving the light resistance may be low. Accordingly, the lower limit value is preferably 50 ppm, more preferably 100 ppm.

In addition to the above-mentioned additives, various photostabilizers (such as radical trapping agents) may be incorporated. Specifically, a benzoate type photostabilizer or a liquid photostabilizer may, for example, be mentioned. Further, an organic phosphorus type heat stabilizer such as a phosphite may be incorporated, and its amount is usually at most 2,000 ppm, preferably at most 1,000 ppm.

As an index for the light resistance of the thermoplastic resin composition of the present invention, the change in light transmittance at a wavelength of 650 nm, by irradiation, may be employed. As a general change of a resin material exposed to light including ultraviolet light, cracking on the surface of the molded product or bleeding out of a low molecular weight organic substance, may be mentioned in addition to coloration such as yellowing. To evaluate the cause for losing the transparency (devitrification) other than such coloration, independently of the coloration, evaluation of the light transmittance at a longer wavelength side (i.e. a wavelength of 650 nm) of the visible light wavelength region, is suitable, because yellowing may most sharply be detected by a light transmittance at a short wavelength side of a visible light region in the vicinity of a wavelength of 400 nm.

Such a method for evaluating the cause of devitrification by the light transmittance at a wavelength of 650 nm, may, for example, be defined as follows. Namely,
(1) An irradiation test by a 100 W ultra-high pressure mercury lamp having ultraviolet light with a wavelength of at most 250 nm substantially cut off, is carried out on a thermoplastic resin composition for 72 hours in the air;
(2) The distance condition of the lamp is set to be such that the intensity of ultraviolet light with a wavelength of 350 nm generated by the lamp is within a range of from 100 to 150 mW/cm² on the surface of the thermoplastic resin composition; and
(3) The temperature condition is set to be within a range of from 20 to 80°C.

A thermoplastic resin composition which exhibits a light transmittance at a wavelength of 650 nm after the irradiation test of at least 70% per mm of light path length, is preferred in the present invention. This light transmittance is of course preferably large, and it is more preferably at least 75%, most preferably at least 80%. Here, the temperature condition is such that the atmospheric temperature at the irradiated surface position of the thermoplastic resin composition to be tested, is measured by a common thermometer.

As more specific evaluation conditions for the above method for evaluating the cause for devitrification, an irradiation test under the following conditions (1) and (2) may be mentioned, which is applied to a thermoplastic resin composition or to a molded product obtained by using such a composition.
(1) An ultra-high pressure mercury lamp which does not substantially emit ultraviolet light having a wavelength of at most 250 nm, is used at such a distance that the intensity of ultraviolet light having a wavelength of 350 nm generated by the lamp would be 0.1 W/cm² on the surface of the thermoplastic resin composition; and
(2) The thermoplastic resin composition is irradiated for 72 hours in the air at the surface temperature thereof being 60°C.

Accordingly, with respect to the thermoplastic resin composition of the present invention and the molded product obtained by using such a resin composition, the light transmittance at a wavelength of 650 nm after the irradiation test, is preferably within the above-mentioned range. If the light transmittance at a wavelength of 650 nm after the irradiation test, is less than 70%, a problem such as cracking on the surface of the molded product is likely to result, thus leading to a practical problem, especially in an application where high ultraviolet resistance is required.

Further, a preferred thermoplastic resin composition of the present invention is one having the ultraviolet resistance highly improved and has a characteristic such that the retention of the light transmittance at a wavelength of 420 nm after the irradiation test under the following conditions (1) and (2), is at least 60%.
(1) An ultra-high pressure mercury lamp which does not substantially emit ultraviolet light having a wavelength of at most 250 nm, is used at such a distance that the intensity of ultraviolet light having a wavelength of 350 nm generated by the lamp would be 0.3 W/cm² on the surface of the thermoplastic resin composition; and
(2) The thermoplastic resin composition is irradiated for 4 hours in the air at the surface temperature thereof being 95°C.

The above retention of the light transmittance at a wavelength of 420 nm is more preferably at least 70%, most preferably at least 80%. If the retention of the light transmittance at a wavelength of 420 nm after the irradiation test is less than 60%, the transparency of the molded product tends to decrease, or a problem such as melting, or coloration such as yellowing, tends to result, thus leading to a practical problem, especially in an application where high ultraviolet resistance is required.

Although the specific method is not particularly limited, the thermoplastic resin composition having such high ultraviolet resistance is obtainable especially when the glass filler contained therein is the above-mentioned glass filler having a coating layer made substantially of a silicon oxide composition, on its surface.

Accordingly, the thermoplastic resin composition of the present invention is preferably one, of which the outermost surface of a residual powder after incineration at 600°C in the air, consists essentially of a silicon oxide composition. It is possible to confirm by means of an X-ray photoelectron spectroscopic apparatus (abbreviated as XPS or ESCA) that the outermost surface consists essentially of a silicon oxide composition. The measuring conditions are such that as the excitation source, Al-Kα ray (excitation energy: 1,486.6 eV) monochromatized by a monochrometer, is applied to the surface of a sample at an output of 30 W, and photoelectrons generated from 500 µm × 500 µm within the irradiated region are subjected to an energy analysis under conditions of a pass energy of 58.7 eV and a take-out angle of 45°. From the obtained XPS spectrum, the respective peak area intensities of detected elements are determined, and the surface element composition (excluding hydrogen) is simply quantified by a relative sensitivity coefficient method.

The above expression reading "the outermost surface of a residual powder consists essentially of a silicon oxide composition" means that the surface in a depth of at least 10 nm from the outermost surface of the residual powder is made of a silicon oxide composition and does not contain positive elements derived from the inorganic ultraviolet absorber, and particularly preferred is a case where the surface in a depth of 20 nm is made of a silicon oxide composition and contains no such positive elements. As the inorganic ultraviolet absorber, an oxide of at least one element selected from titanium, zinc, cerium and antimony, is advantageously used from the viewpoint of the ultraviolet absorptivity, etc., and it is preferred that the total content (the surface atomic concentration) of titanium, zinc, cerium and antimony in the depth of at least 10 nm from the outermost surface is at most 1,000 ppm, i.e. not more than the detection limit.

That the thermoplastic resin composition of the present invention has such a characteristic after the incineration, is attributable to that the surface of the glass filler consists substantially of a silicon oxide composition. Accordingly, with such a thermoplastic resin composition of the present invention, the ultraviolet resistance of a molded product obtained by using it can be highly improved, and consequently, it is possible to suppress deterioration of the molded product of the resin, such as coloration, melting or cracking, by irradiation with light for a long time.

A preferred thermoplastic resin composition of the present invention may be expressed also as a thermoplastic resin composition comprising (1) a thermoplastic resin, and (2) a glass filler containing at least one element selected from titanium, zinc, cerium and antimony, of which the outermost surface of a residual powder after incineration at 600°C in the air, consists essentially of a silicon oxide composition.

The thermoplastic resin composition of the present invention may suitably be used for optical applications in which transparency and/or light resistance is required. Among such optical applications, it may suitably be used also for an application to improve the light resistance (yellowing resistance) of a light scattering plate or a reflector plate of a liquid crystal display device (particularly a liquid crystal television). In such an application, a film or sheet of the thermoplastic resin composition is required to have a light scattering or reflecting function. For this purpose, it is preferred to improve the whiteness degree (i.e. reflectivity) by incorporating an inorganic filler to scatter and diffuse light passing through the thermoplastic resin composition. In such an application, a resin capable of presenting a film which is semi-crystalline but has substantial transparency by controlling the crystallinity or stretch-orientation, such as a PET resin, may also be suitably used.

As such an inorganic filler, barium sulfate, strontium sulfate, calcium sulfate, magnesium sulfate, barium carbonate, strontium carbonate, calcium carbonate, magnesium carbonate, talc, kaolin, mica, clay mineral, synthetic mica, fumed silica or a stable white powder such as zirconia, may be used. Its content is usually from 0.01 to 10 wt%, preferably from 0.1 to 5 wt%, in the thermoplastic resin composition. A preferred inorganic filler is one which has little solubility in water, such as barium sulfate or fumed silica.

In order to improve the reflectivity, it is possible to incorporate an inorganic filler having metallic luster (such as metal flakes). Further, particularly in order to improve the light scattering property, a film or sheet of the thermoplastic resin composition may be stretched to form voids (empty spaces) at the interface between the resin matrix and the inorganic filler or the glass filler.

The thermoplastic resin composition of the present invention may contain various known stabilizers (such as an antioxidant, a thermal stabilizer and a flame retardant) a color adjusting agent such as a pigment, a dyestuff, a fluorescent brightener or a blueing agent, or an additive such as an antistatic agent, a release agent or a lubricant, unless the purpose of the present invention is thereby substantially hindered.

### METHOD FOR PRODUCING THE THERMOPLASTIC RESIN COMPOSITION

There is no particular restriction as to the method for producing the thermoplastic resin composition of the present invention. For example, a known mixing method may be used, such as a solution blending method wherein in a good solvent for the thermoplastic resin, the resin is mixed with constituting components such as the above glass filler, an optional organic ultraviolet absorber, various photostabilizers, etc., and then the solvent is removed, or a method of melt kneading the thermoplastic resin and the above constituting components by e.g. a twin-screw extruder. The most preferred method is melt-kneading by a twin-screw extruder.

### MOLDED PRODUCT 1

The molded product of the present invention is one prepared by molding the thermoplastic resin composition of the present invention and is preferably one in which the minimum light path length is at least 0.1 mm. The minimum light path length corresponds to the thickness of the thinnest portion through which light can be transmitted in an application to have the light transmitted, and it is, for example, meant for the thickness of the concave portion of a concave lens, the thickness of the edge portion of a convex lens, or the thickness of a substrate portion between individual small lenses in a multilens such as a fly eye lens (one having small lenses arranged on a flat surface like a "compound eye").

Such a molded product can be molded by a known thermoplastic molding method such as injection molding, extrusion molding, press molding or injection press molding. Further, a known solution molding method may also be used, and a sheet-shaped molded product can be formed by various film forming methods such as dip coating, die coating, bar coating, spray coating and spin coating.

In an irradiation test under the following conditions (1) and (2), the molded product of the present invention exhibits a light transmittance at a wavelength of 650 nm after the irradiation test, of preferably at least 70%, more preferably at least 75%, most preferably at least 80%, per mm of light path length.
(1) An ultra-high pressure mercury lamp which does not substantially emit ultraviolet light having a wavelength of at most 250 nm, is used at such a distance that the intensity of ultraviolet light having a wavelength of 350 nm generated by the lamp would be 0.1 W/cm² on the surface of the molded product; and
(2) The molded product is irradiated for 72 hours in the air at the surface temperature thereof being 60°C.

Further, a preferred molded product of the present invention is one having the ultraviolet resistance highly improved and has a characteristic such that the retention of the light transmittance at a wavelength of 420 nm after the irradiation test under the following conditions (1) and (2) is at least 60%.
(1) An ultra-high pressure mercury lamp which does not substantially emit ultraviolet light having wavelength of at most 250 nm, is used at such a distance that the intensity of ultraviolet light having a wavelength of 350 nm generated by the lamp would be 0.3 W/cm² on the surface of the molded product; and
(2) The molded product is irradiated for 4 hours in the air at the surface temperature thereof being 95°C.

This numerical value is further preferably at least 70%, most preferable at least 80%. The reason why the light transmittance at a wavelength of 650 nm after the irradiation test and the retention of the light transmittance at a wavelength of 420 nm, of the molded product, are preferably as described above, is the same as explained with respect to the thermoplastic resin composition of the present invention.

In a case where the molded product of the present invention is used for optical applications as described hereinafter, there may be a case where it preferably has an inorganic coating layer for the purpose of preventing reflection, improving the efficiency for taking out light, or improving the surface hardness (hard coating), electric conductivity or antistatic property. As the material for such an inorganic coating layer, silica is most common, and as a high refractive index material, titania (titanium oxide), a double oxide of the titanium and lanthanum, zinc oxide, or zirconia (zirconium oxide) may, for example, be mentioned. As a low refractive material, magnesium fluoride or mesoporous silica may be mentioned. It is usually preferred that such an inorganic coating layer is formed over the entire surface of the molded product. If required, it may be formed on both sides of the molded product. Further,inorganic coating layers having a plurality of functions may be laminated.

In an application to an optical component, it is usually preferred to apply an anti-reflection coating (which may be abbreviated as an AR coating). As such an AR coating, conventional one may be used, and, for example, one having a silica layer and a titania layer alternately laminated, one having a silica layer and a titania/lanthanum double oxide layer alternately laminated, one having a double layer structure i.e. having a high refractive index layer such as a titania layer or a titania/lanthanum composite oxide layer laminated on silica, or one employing magnesium fluoride as a low refractive index layer, may be mentioned. The inorganic coating layer is usually formed by a known vacuum process such as a vapor deposition process or a sputtering process. It may also be formed by a coating process from a liquid starting material, but such a coating may, in many cases, be inferior to the one formed by the vacuum process with respect to the property such as the hardness, density, electro-conductivity or homogeneity.

The thickness of the inorganic coating layer is usually from 0.1 to 10 µm, its upper limit value is preferably 5 µm, more preferably 3 µm from the viewpoint of crack resistance on the resin molded product, the transparency and the costs, and its lower limit value is preferably 0.3 µm, more preferably 0.5 µm, from the viewpoint of the strength.

The molded product of the present invention having such an inorganic coating layer preferably shows a characteristic such that in a case where (1) it is used under a condition that the intensity of ultraviolet light having a wavelength of 350 nm contained in the light emitted from a white light source would be 2 mW/cm² on the surface of the molded product, and (2) the molded product is irradiated for 1,400 hours in the air at the surface temperature thereof being 110°C, the retention of the light transmittance at a wavelength of 420 nm after the irradiation, is at least 70%. Here, the irradiation is carried out via the inorganic coating layer. This can be accomplished by applying the above-mentioned anti-reflection coating on a molded product obtained by using the thermoplastic resin composition of the present invention, particularly a preferred resin composition of the thermoplastic resin composition of the present invention. A particularly preferred anti-reflection coating is one having a silica layer and a titania layer alternately laminated.

The molded product of the present invention is useful particularly as an optical component (such as a lens or prism) to be used in an application for transmitting light which may contain ultraviolet light, by utilizing the transparency and light resistance which are characteristics of the thermoplastic resin of the present invention.

As specific examples of such a molded product, lenses may, for example, be mentioned. A lens useful as a molded product of the present invention is one, of which the thickness of the thickest portion is usually from 0.1 to 100 mm, preferably from 0.5 to 50 mm, more preferably from 1 to 30 mm. If this thickness is too large, there may be a case where molding shrinkage takes place, the dimensional change after the molding due to a temperature or humidity change becomes extremely large, or a molding residual strain becomes extremely large. On the other hand, if it is too small, the focal length of the lenses may not sufficiently be taken, or the mechanical strength may be inadequate. The diameter of the lens is usually from 0.1 to 1,000 mm, preferably from 0.5 to 500 mm, more preferably from 1 to 200 mm. If this diameter is too large, there may be a case where molding shrinkage takes place, the dimensional change after the molding due to a temperature or humidity change becomes extremely large, or a molding residual strain becomes extremely large. On the other hand, if it is too small, the focal length of the lens may not sufficiently be taken, or the mechanical strength may be inadequate.

In a projector using an ultra-high pressure mercury lamp as a light source and a commercially available ultraviolet shielding plate between the light source and a group of lenses, it is desired to substitute a lens made of a resin for a lens made of glass, for the purpose of reducing the weight or the costs. With conventional lenses made of transparent resins, coloration or devitrification by use for a long period of time was problematic. The above lens not only solves such problems but also can be molded by a known thermoplastic molding method, whereby its industrial value is high also with a view to reducing the production cost.

The molded product of the present invention is useful also as a sheet-form molded product excellent in mechanical strength such as impact resistance against collision of a small stone or hail, and excellent in durability against exposure to sunlight. For such a sheet-form molded product, the aromatic polycarbonate resin composition of the present invention may be used particularly preferably because of its mechanical strength. The thickness of such a sheet-form molded product is usually from about 0.1 to 100 mm, preferably from 0.5 to 70 mm, more preferably from about 1 to 50 mm, from the viewpoint of the mechanical strength and light weight, and such a sheet-form molded product may, for example, be utilized for a roof at a parking lot, a transparent sound insulating wall for a road, or a wind shield glass for an automobile or air craft. Such a sheet-form molded product will usually be a molded product far larger than the above-mentioned lens and may preferably be produced by known extrusion molding.

The thermoplastic molding temperature for the molded product of the present invention is usually within a range of from 150 to 370°C, preferably from 170 to 340°C, more preferably from 200 to 320°C, from the viewpoint of the molding fluidity and prevention of heat deterioration due to an excessive high temperature. In a case where a thermoplastic resin composition of the present invention employing the above-mentioned glass flakes, is to be formed into a molded product, by controlling the shearing or flow path during such molding, it may be possible to have such flakes aligned in the plane direction to provide preferred light resistance or mechanical strength.

### MOLDED PRODUCT 2

Another molded product of the present invention is a molded product obtained by using a thermoplastic resin composition comprising a thermoplastic resin and a glass filler containing at least one element selected from titanium, zinc, cerium and antimony, of which the outermost surface of a residual powder after incineration at 600°C in the air, consists essentially of a silicon oxide composition, which has a total light transmittance (hereinafter sometimes referred to simply as Tₜ) of from 40 to 100% and a haze (also called turbidity) of from 50 to 100% (hereinafter sometimes referred to as "molded product 2"). The haze is the proportion of scattered light (i.e. light not going straight) in the total transmitted light.

Such a molded product has not only a high level of light resistance intended by the present invention but also a large total light transmittance, and yet, a large proportion of transmitted light will be light scattered in the molded product i.e. not light going straight. Accordingly, it is most suitable for application to a component whereby while securing light resistance and total luminance, transmitted light is not straight light thereby to improve the uniformity of luminance in the luminescent plane, like a scattering plate (for which improvement in light resistance such as resistance against coloration during use for a long time, is desired, since it is exposed to ultraviolet light emitted by a cool cathode-ray tube as a light source) to be used for a liquid crystal television or a liquid crystal display having a light source immediately below.

The above total transmittance Tₜ is preferably as large as possible, and its lower limit value is preferably 50%, more preferably 60%, from the viewpoint of effective use of light in an optical application. Further, the haze is preferably as large a possible so long as Tₜ will not be substantially lowered, and its lower limit value is preferably 60%, more preferably 70%, from the viewpoint of the light scattering ability.

The thickness of the molded product 2 is usually from 0.1 to 50 mm. Its upper limit value is preferably 30 mm, more preferably 10 mm, from the viewpoint of the total transmittance, and its lower limit value is preferably 0.2 mm, more preferably 0.3 mm from the viewpoint of the mechanical strength and the light scattering ability of the molded product.

The molded product 2 may contain fine particles other than the glass filler, which contains at least one element selected from titanium, zinc, cerium and antimony, in the thermoplastic resin composition as the starting material, for the purpose of improving the light scattering ability. In such a case, the fine particles (hereinafter referred to as "additive fine particles") will serve to scatter light at the interface with the resin matrix. For this purpose, irrespective of addition or non-addition of the additive fine particles, the molded product may further be stretched to form voids (spaces) at the interface between the resin matrix and the above glass filler and/or the additive fine particles, thereby to make light scattering effective. From the viewpoint of such light scattering ability, the size of the above-mentioned additive fine particles or the above-mentioned voids to be formed by stretching, is particularly preferably at a level of a visible light wavelength (from 400 to 650 nm), but as an average diameter, it is usually from 0.1 to 50 µm, preferably from 0.2 to 30 µm, more preferably from 0.3 to 10 µm.
The amount of the additive fine particles is usually from 0.001 to 20 wt%, and its upper limit value is preferably 15 wt%, more preferably 10 wt%, from the viewpoint of the total light transmittance, and its lower limit value is preferably 0.01 wt%, more preferably 0.1 wt%, from the viewpoint of the light scattering ability.

Such a molded product 2 is usually produced by known thermoplastic molding such as injection molding or extrusion molding. In order to obtain a sheet-form molded product having a large area, extrusion molding such as T-die molding or inflation molding is most suitable. The temperature for such thermoplastic molding is usually from 200 to 370°C, preferably from 220 to 350°C, more preferably from 250 to 330°C, from the viewpoint of the molding property (particularly reduction of the molding residual strain) and suppression of deterioration by heat decomposition. In the case of thermoplastic molding of a PET resin or a noncrystalline polyolefin resin, it is usually from 200 to 350°C, preferably from 220 to 330°C, more preferably from 240 to 300°C, from the viewpoint of the molding property (particularly reduction of the molding residual strain) and suppression of deterioration by heat decomposition.

### EXAMPLES

Now, the content and effects of the present invention will be described in further detail with reference to Examples. However, it should be understood that the present invention is by no means restricted to the following Examples.

### MEASURING APPARATUS

(1) Light transmittance: HP8453 model ultraviolet visible light absorption photometer, manufactured by Hewlett-Packard Development Company.
(2) Observation by transmission electron microscope (TEM): H-9000UHR model transmission electron microscope (accelerated voltage: 300kV, vacuum degree during the observation: about 7.6×10⁻⁹ Torr), manufactured by Hitachi, Ltd.
(3) Ultraviolet intensity: Illuminometer UV-M03 equipped with ultraviolet actinometer, manufactured by ORC® Manufacturing Co., Ltd. When required, a 1/10 dimmer filter was used.
(4) Total transmittance and haze: A haze meter manufactured by Suga Test Instrument Co., Ltd. was used.

Light resistance evaluation 1: Method for evaluating light resistance in Examples 1 to 4 and Comparative Examples 1 to 6.

A resin composition was molded into a flat plate having a thickness of 1 mm by hot-press molding (the molding temperature was 280°C in a case where an aromatic polycarbonate resin (hereinafter sometimes referred to simply as PC) was used, or 260°C in a case where a polycycloolefin resin (hereinafter sometimes referred to simply as PCO) was used). Before such a molded product was subjected to irradiation as described below, the light transmittances at wavelengths of 340 nm, 400 nm and 650 nm were measured in the air at room temperature to obtain values per mm of light path length. Then, such a molded product was subjected to irradiation by a 100 W ultra-high pressure mercury lamp in the air, and the light transmittance at a wavelength of 650 nm upon expiration of 72 hours of irradiation, was measured in the air at room temperature, and other aspects were visually observed. At the time of this irradiation test, the distance (about 5.5 cm) from the light source to the sample was adjusted so that the intensity of ultraviolet light having a wavelength of 350 nm on the surface of the flat plate sample became 0.1 W/cm². During this irradiation test, the temperature of the sample surface was 60°C. Further, during this irradiation test, the intensity of the ultraviolet light having a wavelength of 250 nm at the sample surface was at most 0.3 mW/cm², and it is evident that the ultra-high pressure mercury lamp used here was one which did not substantially emit ultraviolet light having a wavelength of at most 250 nm.

The evaluation results are summarized in Table 1 given hereinafter. In Table 1, as the thermoplastic resin used, the aromatic polycarbonate resin was abbreviated as PC, and the polycycloolefin resin was abbreviated as PCO.

### EXAMPLE 1: AROMATIC POLYCARBONATE RESIN COMPOSITION

Glass flakes (TSG flakes manufactured by Nippon Sheet Glass Co., Ltd.) prepared by mixing a titanium oxide composition to a silicon oxide composition to have a refractive index adjusted to 1.59 and having an aspect ratio of about 10, were surface-treated with 3-aminopropyltrimethoxysilane (the amount of surface treatment was about 0.3 wt%). Such aminosilane-treated glass flakes (0.062 g) and NOVAREX 7027U-6 (5.99 g, NOVAREX is a registered trademark) being a bisphenol A aromatic polycarbonate resin (having an inorganic ultraviolet absorber incorporated) manufactured by Mitsubishi Engineering-Plastics Corporation, were mixed in tetrahydrofuran (50 ml) while stirring under a heat refluxing condition for about 12 hours in a dry nitrogen atmosphere. From the mixture, tetrahydrofuran was distilled off under atmospheric pressure, and the residue was vacuum-dried at 120°C for 24 hours to obtain a thermoplastic resin composition of the present invention containing the organic ultraviolet absorber and the antioxidant.

Further, the starting material aromatic polycarbonate resin was analyzed, whereby about 700 ppm of 2-(2H-benzotriazol-2-yl)-4-octylphenol as a benzotriazole type ultraviolet absorber, and about 700 ppm of tris(2,4-di-t-butylphenyl) phosphite as an antioxidant, were detected and quantified. This ultraviolet absorber has an absorption band at a wavelength of at most 400 nm. This aromatic polycarbonate resin was dissolved in tetrahydrofuran.

### EXAMPLE 2: AROMATIC POLYCARBONATE RESIN COMPOSITION

A thermoplastic resin composition of the present invention containing the organic ultraviolet absorber and the antioxidant, was obtained in the same manner as in Example 1 by using TSG flakes manufactured by Nippon Sheet Glass Co., Ltd. having the refractive index of the aminosilane-treated glass flakes (0.022 g) adjusted to 1.61, and the same aromatic polycarbonate resin (5.95 g).

### EXAMPLE 3: POLYCYCLOOLEFIN RESIN COMPOSITION

TSG flakes manufactured by Nippon Sheet Glass Co., Ltd. obtained by mixing a titanium oxide composition to a silicon oxide composition to have the refractive index adjusted to 1.53 and having an aspect ratio of about 10, were surface-treated with 3-aminopropyltrimethoxysilane (amount of surface treatment was about 0.3 wt%). Such aminosilane-treated glass flakes (0.04 g) and AROTN F5023 (9.06 g, ARTON is a registered trademark) being a polycycloolefin resin manufactured by JSR Corporation, were mixed in toluene (60 ml) while stirring under a heat refluxing condition in a dry nitrogen atmosphere. Here, the polycycloolefin resin was dissolved in toluene.

About 6 hours later, 2-(2H-benzotriazol-2-yl)-4-octylphenol (0.0049 g) being a benzotriazole type ultraviolet absorber (trade name: JF-83) manufactured by Johoku Chemical Co., Ltd. and bis(1,2,2,6,6-pentamethyl-4-piperidyl)[[3,5-bis(1,1-dimethylethyl)-4-hydroxyphenyl]methyl]butyl malonate (0.0392 g) being HALS (hindered amine type photostabilizer, trade name: TINUVIN 144) manufactured by Ciba Specialty Chemicals, were added, and heat refluxing was further continued for one hour. This ultraviolet absorber was one having an absorption band at a wavelength of at most 400 nm. Toluene was distilled off under atmospheric pressure, and the residue was vacuum-dried at 120°C for 24 hours to obtain a thermoplastic resin composition of the present invention having both the organic ultraviolet absorber and the photostabilizer incorporated.

### EXAMPLE 4: POLYCYCLOOLEFIN RESIN COMPOSITION

The aminosilane-treated glass flakes as used in Example 3, the polycycloolefin resin (ARTON F5023) as used in Example 3 and toluene, were mixed in the same compositional ratio as in Example 3 and stirred and heat-refluxed for about 16 hours. Toluene was distilled off under atmospheric pressure, and the residue was vacuum-dried at 120°C for 24 hours to obtain a thermoplastic resin composition of the present invention.

### COMPARATIVE EXAMPLE 1: AROMATIC POLYCARBONATE RESIN

As an aromatic polycarbonate resin containing no additive or no glass filler, NOVAREX 7022PJ being an aromatic polycarbonate resin manufactured by Mitsubishi Engineering-Plastics Corporation, was vacuum-dried and used in the same manner as in Example 1.

### COMPARATIVE EXAMPLE 2: AROMATIC POLYCARBONATE RESIN

The aromatic polycarbonate resin (NOVAREX 7027U-6) containing the organic ultraviolet absorber, as used in Example 1, was vacuum-dried and used in the same manner as in Example 1.

### COMPARATIVE EXAMPLE 3: AROMATIC POLYCARBONATE RESIN COMPOSITION

An aromatic polycarbonate resin composition was obtained in the same manner as in Example 2 except that as the aminosilane-treated glass flakes, instead of those having a refractive index of 1.61, those having a refractive index of 1.53 as used in Example 3, were used.

### COMPARATIVE EXAMPLE 4: AROMATIC POLYCARBONATE RESIN COMPOSITION

An aromatic polycarbonate resin composition was obtained in the same manner as in Example 2 by using as aminosilane-treated glass flakes, those having a silica composition having no titanium oxide composition mixed (namely, the glass flakes had no ultraviolet absorbing ability) were used.

### COMPARATIVE EXAMPLE 5: POLYCYCLOOLEFIN RESIN

A polycycloolefin resin having only an ultraviolet absorber and a photostabilizer incorporated to a polycycloolefin resin, was obtained in the same manner as in Example 3 except that the aminosilane-treated glass flakes were not incorporated.

### COMPARATIVE EXAMPLE 6: POLYCYCLOOLEFIN RESIN COMPOSITION

A polycycloolefin resin composition was obtained in the same manner as in Example 3 except that as aminosilane-treated glass flakes, instead of those having a refractive index of 1.53, those having a refractive index of 1.61, as used in Example 2, were used.

In Table 1 given hereinafter, as the used thermoplastic resin, the aromatic polycarbonate resin (refractive index: 1.59) was abbreviated as PC, and the polycycloolefin resin (refractive index: 1.53) was abbreviated as PCO.

Visual observation with respect to Examples 1 to 4 and Comparative Examples 1 to 6
(1) In Comparative Example 1, yellowing by irradiation was particularly distinct as compared with other Examples. This is considered attributable to coloration by Fries rearrangement reaction of the aromatic polycarbonate resin.
(2) In the Comparative Example wherein no glass flakes were added, formation of fine cracks in the surface of the molded product by irradiation, was observed. No such cracking was observed in Examples, and it is considered that the glass flakes effectively protected the outermost surface of the molded product.
(3) In a system containing an organic additive such as an organic ultraviolet absorber or a photostabilizer, if no glass flakes were incorporated, transfer of the organic additive to the surface of the molded product (bleeding out) was distinctly observed. Accordingly, the devitrification by irradiation shown in the column for "650 nm (as time passed)" in Table 1 was considered to be attributable to the bleeding out in addition to the formation of cracks on the surface as mentioned in the above (2). The effects in the above Examples to improve over these problems were considered to have resulted from two factors i.e. the ultraviolet absorptivity of glass flakes and the shielding effect due to the flaky shape.

### PREPARATION EXAMPLE 1: PREPARATION OF SILICA GLASS FLAKES CONTAINING TiO₂ NANO PARTICLES

MKC Silicate MS51 (4.9 g, MKC Silicate is registered trademark) manufactured by Mitsubishi Chemical Corporation being a tetramethoxysilane oligomer and an acetyl acetone complex of aluminum (0.05 g) were dissolved in methanol (10 g) at room temperature. This methanol solution (4.6 g), water (0.32 g) and a 15 wt% n-butanol dispersion (0.93 g) of TiO₂ nano particles (average particle diameter: 20 nm, true density: 3.7 g/cm³, crystal form: anatase 80%) manufactured by C.I.Kasei Company, Limited, were mixed and stirred at 60°C for two hours, and then, methanol was added at room temperature to obtain a methanol diluted solution having a total weight of 290 g. This methanol-diluted solution (35 g) was cast on a SUS flat vat having a flat area of 475 cm², dried for 20 minutes in a dry nitrogen stream and then left to stand for 11 hours in an air oven at 190°C. The solid thus obtained was mechanically pulverized to obtain silica glass flakes containing TiO₂ nano particles (hereinafter referred to simply as TiO₂-containing flakes).

By the NMR spectrum measurement of silicon, such TiO₂-containing flakes were found to be such that methoxy groups derived from the teramethoxysilane oligomer as the starting material were almost completely diminished and the material became highly inorganic, and its silicon oxide composition was substantially a silica composition (SiO₂). The theoretical composition of such TiO₂-containing flakes is TiO₂/SiO₂=15.2/84.8 (weight ratio), and when the densities of the respective phases are 3.7 and 2.2, respectively, the volume ratio is calculated to be 12/88 (vol ratio). The refractive index of such TiO₂-containing flakes is calculated to be 1.59 from the volume ratio of the respective phases when the refractive indices of the TiO₂ phase and the SiO₂ phase are assumed to be 2.39 and 1.48, respectively. Further, the aspect ratio of the flakes was about 10, and the maximum length was about 20 µm.

### PREPARATION EXAMPLE 2: PREPARATION OF TiO₂-CONTAINING FLAKES HAVING A SILICA COATING LAYER

By a sol-gel method, TiO₂-containing flakes having a silica coating layer were prepared.

Namely, the TiO₂-containing flakes obtained in Preparation Example 1 were suspended and dispersed at a concentration of 5 wt% in water at room temperature, and SNOWTEX ST-O being an aqueous dispersion of colloidal silica manufactured by Nissan Chemical Industries, LTD. (the weight of the silica was adjusted to be 2 wt% of the weight of the TiO₂-containing flakes, and SNOWTEX is a registered trademark) was added, followed by stirring and mixing at room temperature. Then, aqueous ammonia having a concentration of 0.01 N was dropwise added thereto with stirring at room temperature, to adjust the pH to about 8, followed by centrifugal separation to precipitate the TiO₂-containing flakes. The precipitated TiO₂-containing flakes were thoroughly washed with water, then washed with methanol and further washed with acetone, and dried at room temperature in a dry nitrogen stream. The TiO₂-containing flakes thus obtained were found to have a silica coating layer (thickness: 15 to 30 nm) derived from SNOWTEX ST-O, on the surface of the flakes, by observation by a transmission electron microscope. The TiO₂-containing flakes having such a silica coating layer will hereinafter be referred to as "silica-coated TiO₂-containing flakes".

The silica-coated TiO₂-containing flakes thus obtained, were found by the XPS analysis to be such that the total content of titanium, zinc, cerium and antimony in a depth of at least 10 nm from the outermost surface of the flakes, was at most 1,000 ppm. Further, in the thermogravimetric analysis (held at 600°C in the air for 60 minutes), there was no substantial thermal weight reduction, whereby it is evident that no organic substance was contained. Further, the aspect ratio of the flakes was about 10, and the maximum length was about 20 µm.

### PREPARATION EXAMPLE 3: PREPARATION OF SILICA-COATED TiO₂-CONTAINING FLAKES HAVING THE SURFACE TREATED WITH EPOXY SILANE

The silica-coated TiO₂-containing flakes obtained in Preparation Example 2 (99 parts by weight), 3-glycidyloxypropyltrimethoxysilane (1 part by weight), acetic acid (0.1 part by weight) and water (3 parts by weight) were stirred for 1 hour in a large excess amount of ethanol under heating and refluxing and concentrated under reduced pressure by an evaporator. The obtained residue was vacuum-dried at 100°C overnight. In the thermogravimetic analysis (held at 600°C in the air for 60 minutes), a thermal weight reduction of slightly less than 1 wt% was observed, whereby it is considered that epoxy groups were introduced by bonding of 3-glycidyloxypropyltrimethoxysilane as an epoxy silane on the surface of the flakes. Further, the aspect ratio of the flakes was about 10, and the maximum length was about 20 µm.

### EXAMPLE 5: AROMATIC POLYCARBONATE RESIN COMPOSITION HAVING TiO₂-CONTAINING FLAKES DISPERSED

44.5 parts by weight of each of two types of bisphenol A aromatic polycarbonates having viscosity average molecular weights (Mv) of 30,000 and 15,000, respectively (NOVAREX 7030A and 7020AD2, manufactured by Mitsubishi Engineering-Plastics Corporation, and NOVAREX is a registered trademark) and 1 part by weight of the TiO₂-containing flakes obtained in Preparation Example 1 (total: 100 parts by weight) were melt-kneaded at 290°C by means of a very small amount kneading molding machine manufactured by Imoto Machinery Co., Ltd., to obtain a resin composition, which was subjected to melt extrusion molding in a mold to obtain a flat plate of 15 mm × 15 mm having a thickness of 2 mm.

### EXAMPLE 6: AROMATIC POLYCARBONATE RESIN COMPOSITION HAVING SILICA-COATED TiO₂-CONTAINING FLAKES DISPERSED

In Example 5, the same melt kneading and molding operation was carried out by using the silica-coated TiO₂-containing flakes obtained in Preparation Example 2 instead of the TiO₂-containing flakes, to obtain a flat plate.

### EXAMPLE 7: AROMATIC POLYCARBONATE RESIN COMPOSITION HAVING SILICA-COATED TiO₂-CONTAINING FLAKES DISPERSED

In Example 5, the same melt kneading and molding operation was carried out by using the silica-coated TiO₂-contining flakes having the surface treated with epoxy silane, obtained in Preparation Example 3 instead of the TiO₂-cotaining flakes, to obtain a flat plate.

### EXAMPLE 8: AROMATIC POLYCARBONATE RESIN COMPOSITION HAVING THE SILICA-COATED TiO₂-CONTAINING FLAKES DISPERSED AND HAVING HALS INCORPORATED

0.2 part by weight of HALS (TINUVIN 144) as used in Example 3, was added to the mixed composition of Example 6, and the same melt kneading and molding operation was carried out to obtain a flat plate.

### COMPARATIVE EXAMPLE 7: AROMATIC POLYCARBONATE RESIN COMPOSITION HAVING TiO₂ NANO PARTICLES DISPERSED

In Example 5, the same melt kneading and molding operation was carried out by using TiO₂ nano particles used as the starting material in Preparation Example 1, instead of the TiO₂-containing flakes, to obtain a flat plate. However, the amount of TiO₂ was adjusted to be 0.15 wt%.

### LIGHT RESISTANCE EVALUATION 2: LIGHT RESISTANCE ACCELERATED TESTS OF EXAMPLES 5 TO 8 AND COMPARATIVE EXAMPLES 1, 2 AND 7

Firstly, each flat plate obtained in each of the above Examples and Comparative Examples was hot-pressed to obtain a press-molded product having a flat and smooth surface having a thickness of 1.2 mm. With respect to such a molded product, the light transmittances at wavelengths of 340 nm, 400nm, 420 nm and 650 nm were measured in the air at room temperature and converted to values per mm of light path length in accordance with Lambert-Bale rule.

Then, with respect to the above flat plate, irradiation by a 130 W ultra-high pressure mercury lamp was carried out in the air, and the retention of the light transmittance at a wavelength of 420 nm upon expiration of four hours of irradiation, was measured in the air at room temperature, and the shape change (the deformation by the self-weight, melting, burnt deposit, etc.) was visually observed.

At the time of irradiation by the ultra-high pressure mercury lamp, the distance from the light source to the sample was adjusted (the distance was 5.5 cm), so that the intensity of ultraviolet light having a wavelength of 350 nm on the surface of the flat plate sample would be 0.3 W/cm². During this irradiation test, the temperature of the surface of the sample was 95°C. Further, during this irradiation test, the intensity of ultraviolet light having a wavelength of 250 nm at the surface of the sample was at most 0.3 mW/cm², and thus, the ultra-high pressure mercury lamp used here, was found to be one which did not substantially emit ultraviolet ray having a wavelength of at most 250 nm.

The evaluation results of Examples 1 to 8 and Comparative Examples 1 to 7 are summarized in the following Table 1.

Further, from the XPS analysis of the residual powder after incineration of the aromatic polycarbonate resin composition in each of Examples 6 to 8 at 600°C in the air, the titanium content in the outermost surface of the residual powder was found to be at most 1,000 ppm, and the outermost surface of the residual powder was found to be substantially a silica composition (SiO₂).

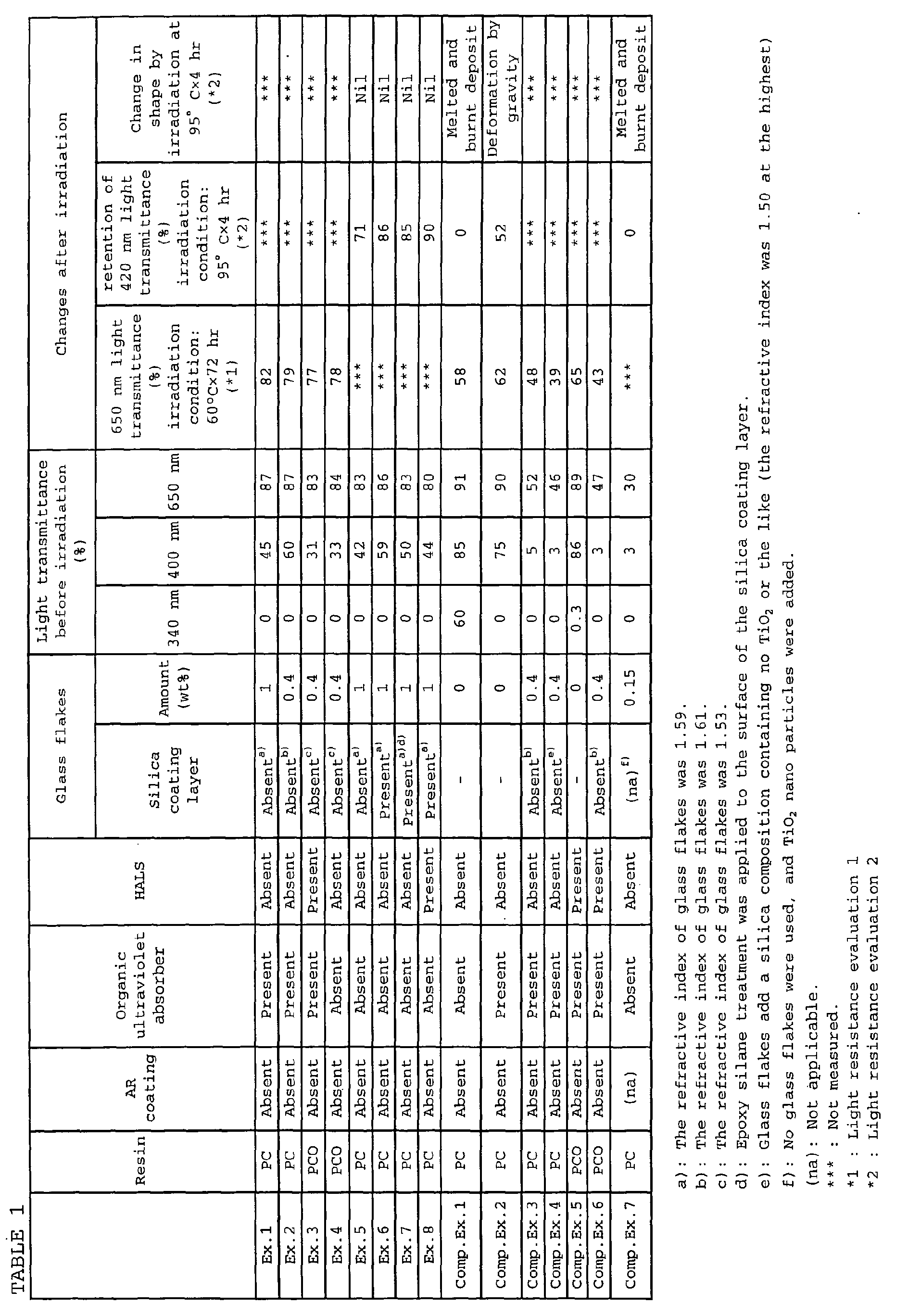

### EXAMPLE 9: LENS

The aromatic polycarbonate resin composition of Example 1 was sandwiched by specular finished convex lens molds (the maximum thickness of the lens was 3 mm) and injection molded (the temperature was 280°C) to obtain a convex lens excellent in transparency, light resistance and heat resistance.

### EXAMPLE 10: MOLDED PRODUCT 1 OF AROMATIC POLYCARBONATE RESIN COMPOSITION HAVING AR COATING APPLIED

An aromatic polycarbonate resin composition having 0.9 wt% of glass flakes same as Example 5 (the amount of glass flakes was 1 wt%) was prepared and molded product 1 was obtained as follows. However, in this example, as the aromatic polycarbonate resin, among the two types of resins used in Example 5, only the one having a low molecular weight, was used.

Namely, 3 parts by weight of TSG flakes (having the refractive index adjusted to 1.59 and having a silica coating layer) manufactured by Nippon Sheet Glass Co., Ltd. which were produced by the same sol-gel method as in Preparation Example 2 and 97 parts by weight of the bisphenol A aromatic polycarbonate (NOVAREX 7020AD2) used in Example 5, were melt-kneaded by a twin screw extruder (screws: the same directional rotation, diameter: 45 mm, L/D=32) to prepare a master batch containing 3 wt% TSG flakes (hereinafter referred to simply as TSG3%MB). The melt kneading conditions were such that the barrel temperature was set at 280°C, the screw rotational speed was 200 rpm, the discharge amount was 50 kg/hr, vacuum vent was operated, two screens (40 and 60 mesh) were used for removing foreign matters, and a die plate of 3.4 mm × 4 perforations, was used. Pellets of this TSG3%MB (30 parts by weight) and the above NOVAREX 7020AD2 (70 parts by weight) were dry-blended and molded into a disk having a diameter of 30 mm and a thickness of 2 mm at a cylinder temperature set at 280°C by means of an injection molding machine ROBOSHOT α-50iA, manufactured by FANUC. On both sides of the disk molded product thus obtained, thin films of silica and titania were alternately laminated in 7 layers by a known vapor deposition method (the layer in contact with the resin and the outermost layer were silica layers) to form an antireflection coating (an AR coating). The total thickness of this AR coating was about 650 nm. The reflectance of this AR coating was at most 0.5% within a wavelength range of from 430 to 670 nm.

### EXAMPLE 11: MOLDED PRODUCT 2 OF AROMATIC POLYCARBONATE RESIN COMPOSITION HAVING AR COATING APPLIED

Molded product 2 was obtained as follows by using the same resin composition as in Example 10 except that it contained 0.2 wt% of HALS.

Namely, under the melt-kneading conditions of Example 10, HALS used in Example 3 (TINUVIN 144, 1 part by weight) and the bisphenol A aromatic polycarbonate used in Example 5 (NOVAREX 7020AD2, 99 parts by weight) were melt-kneaded to prepare a master batch containing 1 wt% of HALS (hereinafter referred to simply as HALS1%MB). Then, pellets of HALS1%MB (20 parts by weight), TSG3%MB obtained in Example 10 (30 parts by weight) and the above NOVAREX 7020AD2 (50 parts by weight) were dry-blended and molded into a disk having a diameter of 30 mm and a thickness of 2 mm by the same method as in Example 10, and the same AR coatings as in Example 10 were applied to both sides.

### EXAMPLE 12: MOLDED PRODUCT 3 OF AROMATIC POLYCARBONATE RESIN COMPOSITION HAVING AR COATING APPLIED

The same test as in Example 11 was carried out except that the material of the AR coatings was made to have a double layer structure of SiO₂ and MgF₂ (the latter was on the resin surface side), and the total thickness was about 130 nm. The reflectance of this AR coating was at most 1.6% within a wavelength range of from 430 to 670 nm.

### LIGHT RESISTANCE EVALUATION 3: LONG-TERM IRRADIATION TEST METHOD OF EXAMPLES 10 TO 12 AND THE RESULTS

The following irradiation test was carried out by using a liquid crystal projector ELP-30, manufactured by SEIKO EPSON CORPORATION. ELP-30 was provided with a fly eye lens A (having an AR coating on each side, made of glass and having a thickness of about 3 mm) at a position of 13 mm from the front plate of an ultra-high pressure mercury lamp (130 W grade) and a fly eye lens B (having an AR coating on each side, made of glass and having a thickness of about 3 mm) at a position of 45 mm from the front plate of the lamp. While maintaining the fly eye lens A as it was, the fly eye lens B was removed, and at that position, the molded disk product having an AR coating (molded product 1, 2 or 3) in Example 10, 11 or 12 was fixed. The intensity of ultraviolet light having a wavelength of 350 nm, contained in white light passed through the fly eye lens A was 2 mW/cm², and the temperature at the position of the fly eye lens B was 110°C. Under such conditions, the irradiation test was carried out, and the results were as follows.

Example 10: In the entire molded product, whitening progressed with time.

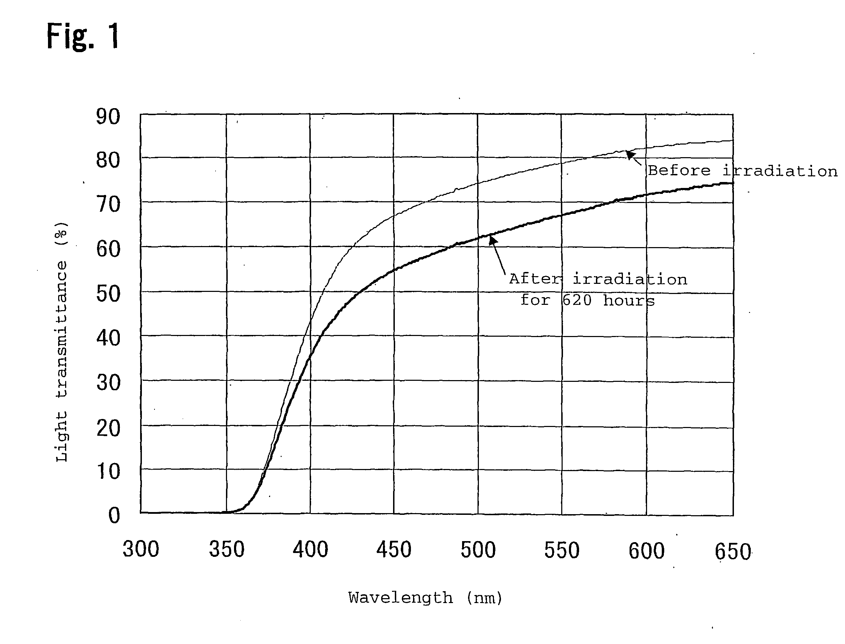

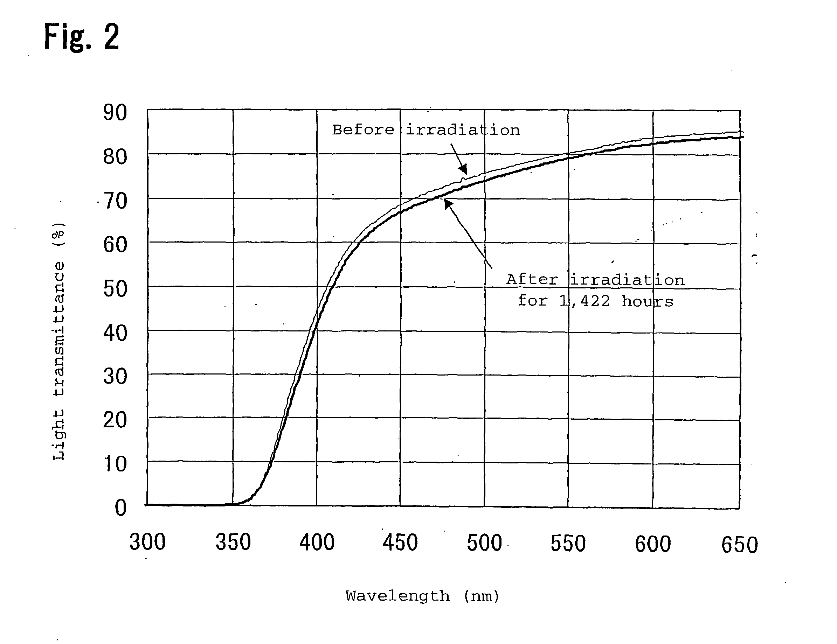

Example 11: At the center portion of the molded product, whitening did not substantially proceed, while whitening gradually progressed from the periphery of the disk where the AR coating did not completely cover. In Fig. 1 (the change with time of Example 10) and Fig. 2 (the change with time of Example 11), the light transmittance spectra as time passed (in each case, measured at the center portion of the molded disk product) are shown.

In Example 10, by irradiation for 620 hours, the light transmittance distinctly decreased (showing the progress of whitening), while in Example 11, even by irradiation for 1,422 hours, the light transmittance did not substantially decrease, and the retention of the light transmittance at a wavelength of 420 nm was 96%.

On the other hand, in Example 12 wherein an AR coating of a double layer structure was applied, the retention of the light transmittance at a wavelength of 420 nm upon expiration of 733 hours of irradiation, was 76%.

Although the resin compositions used in Examples 10 to 12 were excellent in ultraviolet resistance by themselves, it was found that their molded products have the following tendency under the irradiation conditions of a relatively low intensity of ultraviolet light at a level of 2 mW/cm² for a long time, like in this light resistance evaluation 3.
(1) By preparing a resin composition by employing HALS together with the silica-coated TiO₂-containing flakes, it is possible to impart excellent long-term light resistance to a transparent resin such as an aromatic polycarbonate resin.
(2) The light resistance of a molded product is influenced also by the nature of the AR coating. Especially when it is one having a silica layer and a titania layer alternately laminated, it is excellent in light resistance.

### EXAMPLE 13: LIGHT SCATTERING SHEET HAVING SILICA-COATED TiO₂-CONTAINING FLAKES AND BARIUM SULFATE DISPERSED THEREIN

A composition comprising the silica-coated TiO₂-containing flakes obtained in Preparation Example 2 (1 part by weight), barium sulfate (1 part by weight, a guaranteed reagent was pulverized by a mortar) and the two types of bisphenol A aromatic polycarbonates as used in Example 5 (NOVAREX 7030A and 7020AD2, each in an amount of 49 parts by weight), was prepared by using the very small amount kneading molding machine in Example 5 under the same conditions. This composition was hot-pressed at 280°C and formed into a film having a thickness of 0.3 mm.

Here, the composition of this Example 13 is a thermoplastic resin composition such that when it is incinerated at 600°C in the air, the outermost surface of the residual powder would consist essentially of a silicon oxide composition except for the added barium sulfate.

### COMPARATIVE EXAMPLE 8: LIGHT SCATTERING SHEET HAVING ONLY BARIUM SULFATE DISPERSED THEREIN

In Example 13, the silica-coated TiO₂-containig flakes were not added, and the same test was carried out with a composition wherein barium sulfate was 1 wt%, and the composition was formed into a film having a thickness of 0.22 mm.

### LIGHT RESISTANCE EVALUATION 4: EVALUATION OF LIGHT RESISTANCE OF EXAMPLE 13 AND COMPARATIVE EXAMPLE 8

Prior to irradiation, the total light transmittance (Tₜ, %) and the haze (%) were measured by a haze meter manufactured by Suga Test Instruments Co., Ltd.
Irradiation was carried out under the same conditions as in Examples 5 to 8, and the changes upon expiration of 7.5 hours of irradiation were visually observed. The results are shown in Table 2.

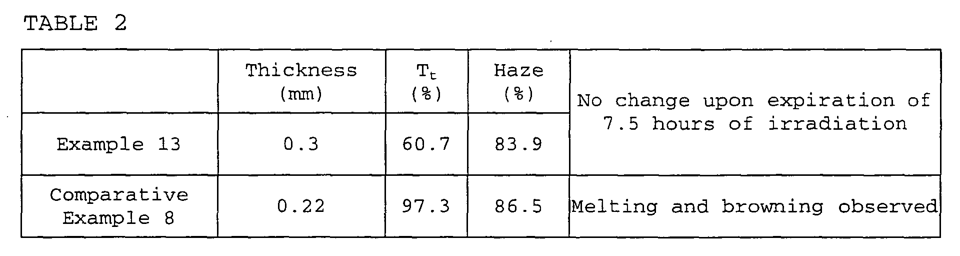

From Table 2, it is evident that the film of the aromatic polycarbonate resin composition in Example 12 is excellent in the light scattering ability and yet is excellent in ultraviolet resistance. Thus, it is useful as a light scattering sheet for e.g. a liquid display.

### INDUSTRIAL APPLICABILITY

The thermoplastic resin composition of the present invention is one having a glass filler dispersed in a thermoplastic resin, said glass filler having its refractive index controlled and having ultraviolet absorptivity, and thus, it is a material excellent in transparency, light resistance (particularly ultraviolet resistance), mechanical strength, adhesion with an inorganic coating layer such as an anti-reflection film and thermoplastic moldability. Accordingly, its molded product is useful as a lens for a projector to be used under a severe condition as exposed to ultraviolet light, or as a transparent sheet to be used outdoors, as exposed to sunlight.

## Claims

1. A thermoplastic resin composition comprising a thermoplastic resin and a glass filler whose glass formulation consists mainly of a silicon oxide composition and exhibiting light transmittances at wavelengths of 340 nm and 400 nm of from 0 to 0.5% and from 30 to 99%, respectively, per mm of light path length.

2. The thermoplastic resin composition according to Claim 1, which contains an inorganic ultraviolet absorber.

3. The thermoplastic resin composition according to Claim 1 or 2, wherein the glass filler contains at least one element selected from the group consisting of titanium, zinc, cerium and antimony.

4. The thermoplastic resin composition according to any one of Claims 1 to 3, of which the outermost surface of a residual powder after incineration at 600°C in the air, consists essentially of a silicon oxide composition.

5. The thermoplastic resin composition according to any one of Claims 1 to 4, of which the total content of titanium, zinc, cerium and antimony at a depth of at least 10 nm from the outermost surface of a residual powder after incineration at 600°C in the air, is at most 1,000 ppm.

6. The thermoplastic resin composition according to any one of Claims 1 to 5, wherein the maximum length of the glass filler is from 0.01 to 100 µm.

7. The thermoplastic resin composition according to any one of Claims 1 to 6, wherein the glass filler is in the form of flakes having an aspect ratio of from 5 to 1,000.

8. The thermoplastic resin composition according to any one of Claims 1 to 7, wherein the content of the glass filler is from 0.001 to 10 wt%.

9. The thermoplastic resin composition according to any one of Claims 1 to 8, wherein the difference in the refractive index between the thermoplastic resin and the glass filler is at most 0.05 at 23°C.

10. The thermoplastic resin composition according to any one of Claims 1 to 9, wherein the thermoplastic resin is either an aromatic polycarbonate resin, a polycycloolefin resin or a polyethyleneterephthalate resin.

11. The thermoplastic resin composition according to any one of Claims 1 to 10, which contains an organic ultraviolet absorber having an absorption band at a wavelength of at most 400 nm.

12. The thermoplastic resin composition according to any one of Claims 1 to 11, which contains a hindered amine type photostabilizer.

13. The thermoplastic resin composition according to any one of Claims 1 to 12, **characterized in that** in a case where (1) an ultra-high pressure mercury lamp which does not substantially emit ultraviolet light having a wavelength of at most 250 nm, is used at such a distance that the intensity of ultraviolet light having a wavelength of 350 nm generated by the lamp would be 0.1 W/cm² on the surface of the thermoplastic resin composition, and (2) the thermoplastic resin composition is irradiated for 72 hours in the air at the surface temperature thereof being 60°C, the light transmittance at a wavelength of 650 nm after the irradiation, is at least 70% per mm of light path length.

14. The thermoplastic resin composition according to any one of Claims 1 to 12, **characterized in that** in a case where (1) an ultra-high pressure mercury lamp which does not substantially emit ultraviolet light having a wavelength of at most 250 nm, is used at such a distance that the intensity of ultraviolet light having a wavelength of 350 nm generated by the lamp would be 0.3 W/cm² on the surface of the thermoplastic resin composition, and (2) the thermoplastic resin composition is irradiated for 4 hours in the air at the surface temperature thereof being 95°C, the retention of the light transmittance at a wavelength of 420 nm after the irradiation, is at least 60%.

15. A thermoplastic resin composition comprising (1) a transparent thermoplastic resin, and (2) a glass filler containing at least one element selected from titanium, zinc, cerium and antimony, of which the outermost surface of a residual powder after incineration at 600°C in the air, consists essentially of a silicon oxide composition.

16. The thermoplastic resin composition according to Claim 15, of which the total content of titanium, zinc, cerium and antimony in a depth of at least 10 nm from the outermost surface of a residual powder after incineration at 600°C in the air, is at most 1,000 ppm.

17. The thermoplastic resin composition according to Claim 15 or 16, wherein the thermoplastic resin is either an aromatic polycarbonate resin, a polycycloolefin resin or a polyethyleneterephthalate resin.

18. The thermoplastic resin composition according to any one of Claims 15 to 17, wherein the maximum length of the glass filler is from 0.01 to 100 µm.

19. The thermoplastic resin composition according to any one of Claims 15 to 18, wherein the glass filler is in the form of flakes having an aspect ratio of from 5 to 1,000.

20. The thermoplastic resin composition according to any one of Claims 15 to 19, wherein the content of the glass filler is from 0.001 to 10 wt%.

21. The thermoplastic resin composition according to any one of Claims 15 to 20, wherein the difference in the refractive index between the thermoplastic resin and the glass filler is at most 0.05 at 23°C.

22. The thermoplastic resin composition according to any one of Claims 15 to 21, which contains an organic ultraviolet absorber having an absorption band at a wavelength of at most 400 nm.

23. The thermoplastic resin composition according to any one of Claims 15 to 22, which contains a hindered amine type photostabilizer.

24. The thermoplastic resin composition according to any one of Claims 15 to 23, which contains an inorganic filler.

25. A molded product which is a molded product of a thermoplastic resin composition, **characterized in that** in a case where (1) an ultra-high pressure mercury lamp which does not substantially emit ultraviolet light having a wavelength of at most 250 nm, is used at such a distance that the intensity of ultraviolet light having a wavelength of 350 nm generated by the lamp would be 0.1 W/cm² on the surface of the molded product, and (2) the molded product is irradiated for 72 hours in the air at the surface temperature thereof being 60°C, the light transmittance at a wavelength of 650 nm after the irradiation, is at least 70% per mm of light path length.

26. A molded product which is a molded product of a thermoplastic resin composition, **characterized in that** in a case where (1) an ultra-high pressure mercury lamp which does not substantially emit ultraviolet light having a wavelength of at most 250 nm, is used at such a distance that the intensity of ultraviolet light having a wavelength of 350 nm generated by the lamp would be 0.3 W/cm² on the surface of the molded product, and (2) the molded product is irradiated for 4 hours in the air at the surface temperature thereof being 95°C, the retention of the light transmittance at a wavelength of 420 nm after the irradiation, is at least 60%.

27. The molded product according to Claim 25 obtained by using the thermoplastic resin composition as defined in any one of Claims 1 to 23.

28. The molded product according to Claim 26 obtained by using the thermoplastic resin composition as defined in any one of Claims 1 to 23.

29. The molded product according to any one of Claims 25 to 28, which has an inorganic coating layer on the molded product.

30. The molded product according to Claim 29, wherein the inorganic coating layer is a reflection preventive coating layer.

31. The molded product according to Claim 29 or 30, wherein the inorganic coating layer is one having a silica layer and a titania layer alternately laminated.

32. An inorganic coating layer-laminated molded product comprising a molded product made of a thermoplastic resin composition and an inorganic coating layer formed thereon, and in a case where (1) it is used under a condition that the intensity of ultraviolet light having a wavelength of 350 nm contained in the light emitted from a white light source would be 2 mW/cm² on the surface of the molded product, and (2) the molded product is irradiated for 1,400 hours in the air at the surface temperature thereof being 110°C, the retention of the light transmittance at a wavelength of 420 nm after the irradiation, is at least 70%.

33. A molded product obtained by using the thermoplastic resin composition as defined in Claim 24, which has a total light transmittance of from 40 to 100% and a haze of from 50 to 100%.
